# EUROPEAN PATENT SPECIFICATION

(11) **EP 3 581 682 B1**
(45) Date of publication and mention of the grant of the patent: **12.06.2024**
(21) Application number: 17895882.3
(22) Date of filing: 06.12.2017
(51) Int. Cl.: C25B 1/04, C25B 11/047, C25B 11/075, C25C 7/02, C25D 13/22, C25D 17/10

(54) **ELECTROLYSIS ANODE**
ELEKTROLYSE-ANODE
ANODE D'ÉLECTROLYSE

(30) Priority: 07.02.2017 JP 2017020392
(43) Date of publication of application: 18.12.2019
(73) Proprietor: Kabushiki Kaisha Toyota Chuo Kenkyusho, Nagakute-shi, Aichi 480-1192 (JP)
(72) Inventor: KAMITAKA Yuji, Nagakute-shi Aichi 480-1192 (JP); MORIMOTO Yu, Nagakute-shi Aichi 480-1192 (JP); KODAMA Kensaku, Nagakute-shi Aichi 480-1192 (JP)
(74) Representative: Kramer Barske Schmidtchen Patentanwälte PartG mbB
(86) International application number: PCT/JP2017/043742
(87) International publication number: WO 2018/146928

(56) References cited:
- EP-A2- 2 515 357
- EP-A2- 2 604 745
- CN-A- 101 386 997
- DE-A1- 3 036 066
- US-A- 3 962 068
- US-A- 4 042 484
- US-A- 4 042 484
- US-B2- 8 383 544
- Ken.Ichi Machida ET AL: "Synthesis and Electrocatalytic Properties of Rare Earth Platinum or Palladium Bronzes", Bull. Chem. Soc. Jpn., 1987, pages 411-413, XP055740517, Retrieved from the Internet: URL:https://www.journal.csj.jp/doi/pdf/10. 1246/bcsj.60.411 [retrieved on 2020-10-15]
- DATABASE WPI Week 197211 Thomson Scientific, London, GB; AN 1972-18008T XP002800704, & JP S47 8340 B (MATSUSHITA ELEC IND CO LTD)
- SHANNON , R. D.: "Synthesis and Properties of Platinum Metal Oxides of the Type MxPt3O4", Inorg. Chem., vol. 21, 1982, pages 3372-3382, XP055534979,

## Description

### FIELD OF THE INVENTION

The present invention relates to an anode including platinum bronze for electrolysis, and a use of such an anode.

### BACKGROUND OF THE INVENTION

Electrolysis is a technique of chemically decomposing a compound by causing reduction reaction at a cathode and oxidation reaction at an anode. Electrolysis has been applied to polymer electrolyte membrane water electrolyzer, electroplating, electrodeposition coating, electrocasting, electrorefining, and others. To perform such electrolysis efficiently, required are electrodes that are high in activity for the intended reaction and excellent in durability under the electrolytic environment. To address this problem, various proposals have been conventionally made.

For example, Patent Literature 1 discloses a water electrolysis cell in which the anode includes a mixture of ruthenium oxide and iridium oxide prepared by a hydroxide coprecipitation method.

The Literature describes that
(a) a RuO₂ electrode, which is smaller in oxygen overvoltage than an IrO₂ electrode, is effective for reducing the cell voltage but poor in durability,
(b) the IrO₂ electrode is excellent in durability, but higher in initial cell voltage than the RuO₂ electrode, and
(c) the cell voltage becomes low and the durability improves when a mixture of RuO₂ and IrO₂ prepared by the hydroxide coprecipitation method is used as the anode.

Non-Patent Literature 1 discloses a method of synthesizing MₓPt₃O₄ (M = Li, Na, Mg, Ca, Zn, Cd, Co, and Ni) type platinum metal oxides.

The Literature describes that LiₓPt₃O₄, CoₓPt₃O₄, and NiₓPt₃O₄ have high oxygen reduction activity and also have voltammetric characteristics comparable to those of a Pt₂O₄ electrode.

As described in Patent Literature 1, iridium oxide is normally used for the anode of a polymer electrolyte membrane water electrolyzer. However, iridium is poor in resources and expensive. To expand the use of the electrolyzer, therefore, an anode made of a less-expensive and abundant material is required.

For anodes for industrial electrolysis such as electroplating, electrodeposition coating, electrocasting, and electrorefining, DSE electrodes including iridium oxide or ruthenium oxide have been used. However, iridium oxide has a problem in resources as described above. Ruthenium oxide has also a problem of being too low in stability to be used singularly.

Non-Patent Literature 1 mentions the water electrolysis characteristics of platinum bronze. However, only the evaluation results on lithium-containing platinum bronze are shown, and the data described are not quantitative ones. Moreover, no evaluation has been made on the stability under the electrolytic environment.

### [Citation List]

### [Patent Literature]

[Patent Literature 1] JP H10-273791 A

### [Non-Patent Literature]

[Non-Patent Literature 1] R.D. Shannon et al., Inorg. Chem., 21, 3372 (1982)

Ken.Ichi Machida et al: "Synthesis and Electrocatalytic Properties of Rare Earth Platinum or Palladium Bronzes", Bull. Chem. Soc. Jpn., 1 January 1987 (1987-01-01), pages 411-413 discloses an anode for electrolysis, comprising platinum bronze containing the metallic element Co.

US 3,962,068 A discloses an anode for electrolysis, comprising platinum bronze containing the metallic element Ag.

JP 5 47-8340 B discloses an anode for electrolysis, comprising platinum bronze containing the metallic element Ag or Cu.

### SUMMARY OF THE INVENTION

An objective of the present invention is to provide an anode for electrolysis including platinum bronze, which is inexpensive and excellent in durability.

The above objective is achieved by an anode for electrolysis according to claim 1 and a use of such an anode according to claim 2.

Since platinum bronze is insoluble in aqua regia, it does not elute even under strong acid conditions where chloride ions coexist and does not degrade even under exposure to a high potential. Also, platinum bronze, which is an oxide itself, is not oxidized any further even at a high potential during water electrolysis, whereby its activity is not reduced, unlike platinum metal.

In particular, platinum bronze containing the predetermined metallic element M exhibits water electrolysis activity higher than Li-containing platinum bronze and iridium oxide. Also, the platinum bronze containing the metallic element M is inexpensive compared to iridium oxide and exhibits high durability comparable to iridium oxide. Therefore, using such platinum bronze as an anode for electrolysis, electrolysis reaction can be performed efficiently.

### BRIEF DESCRIPTION OF THE DRAWINGS

The sample of FIG. 1-4 is not part of the invention. In FIG. 5 and 6, only samples with M being Mn, Bi and Ce are part of the invention.

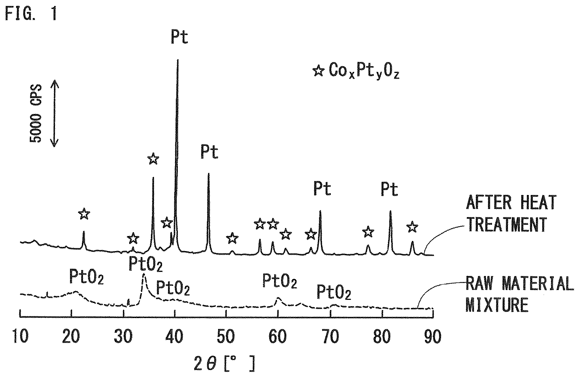

FIG. 1 is an XRD pattern of a sample (CoₓPt₃O₄ + Pt) after heat treatment and a raw material mixture (PtO₂ + Co nitrate) before heat treatment;

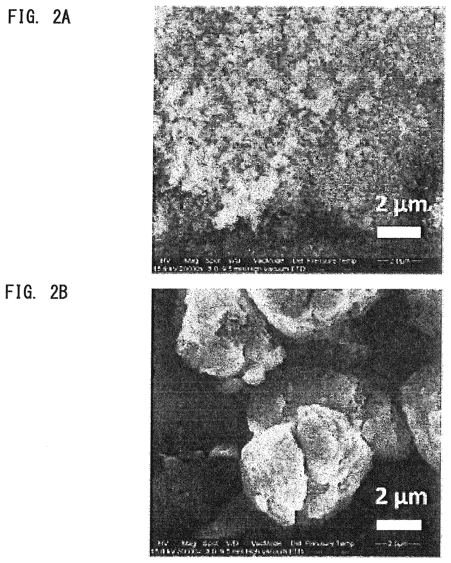

FIGS. 2A and 2B are SEM images of the sample after heat treatment (FIG. 2A) and the raw material mixture before heat treatment (FIG. 2B);

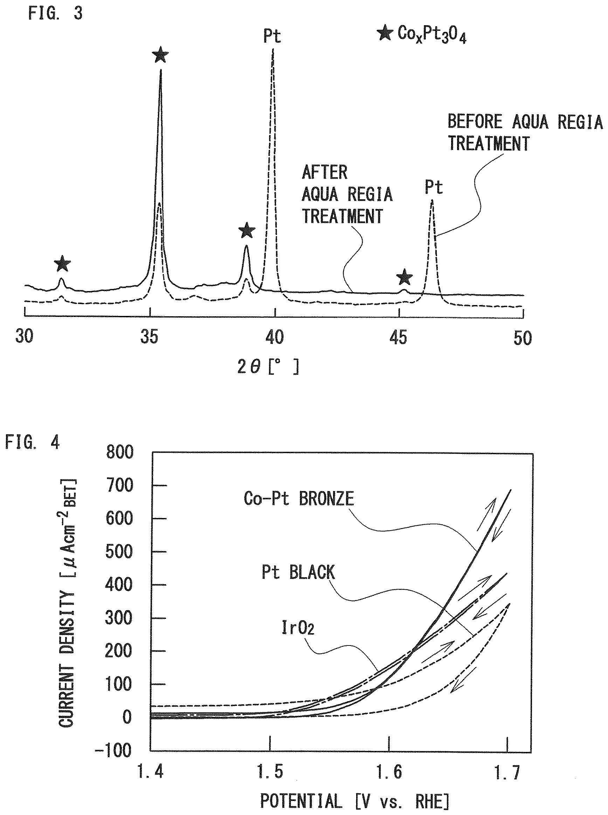

FIG. 3 is an XRD pattern of the sample before and after aqua regia treatment;
FIG. 4 shows cyclic voltammograms of cobalt platinum bronze, platinum black, and IrO₂;

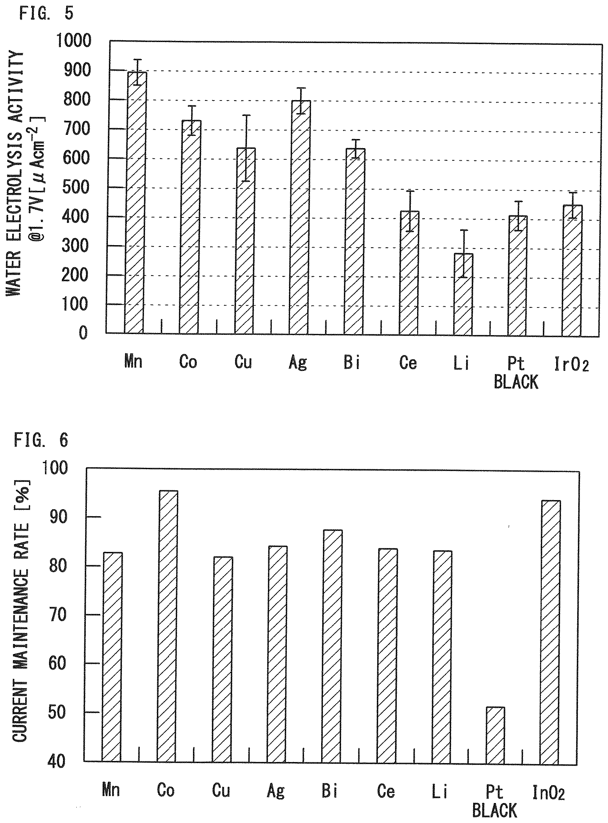

FIG. 5 shows comparisons of the water electrolysis activity among platinum black, IrO₂, and MₓPt₃O₄ (M = Mn, Co, Cu, Ag, Bi, Ce, and Li); and
FIG. 6 shows comparisons of the current maintenance rate after retention of the constant potential at 1.7 V among platinum black, IrO₂, and MₓPt₃O₄ (M = Mn, Co, Cu, Ag, Bi, Ce, and Li) .

### DETAILED DESCRIPTION OF PREFERRED EMBODIMENTS

Hereinafter, an embodiment of the present invention will be described in detail.

### [1. Anode for electrolysis]

The anode for electrolysis according to claim 1 has the following configurations:
(1) the anode for electrolysis includes platinum bronze containing metallic element M, and
(2) the metallic element M is constituted by any one or more elements selected from the group consisting of Mn, Bi, and Ce.

### [1.1. Platinum bronze]

The "platinum bronze" refers to a complex metal oxide including platinum, oxygen, and ions of metallic element M as the third ingredient. The compositional formula of the platinum bronze is generally represented by MₓPt₃O₄. The space group of the platinum bronze is Pm3n, where platinum atoms are at 6c site, oxygen atoms at 8e site, and the metallic element M at 2a site. The amount x of the metallic element M varies depending on the synthesis conditions (the nominal amount of metal, the synthesis temperature, etc.), but is normally 0 < x ≤ 1.

The anode for electrolysis according to claim 1 may be one comprised of only platinum bronze, or one in which platinum bronze is supported on the surface of an appropriate carrier (e.g., a carbon carrier, a conductive oxide carrier, and a metal carrier). The platinum bronze may be used singularly or in combination with another material.

### [1.2. Metallic element M]

The metallic element M is Mn, Bi, or Ce. Any one kind of these elements may be contained in the platinum bronze, or two or more kinds of them may be contained.

The platinum bronze containing any of such metallic elements M exhibits higher water electrolysis activity and higher current maintenance rate than Li-containing platinum bronze.

### [1.3. Use]

The anode for electrolysis according to claim 1 can be used as anodes for various types of industrial electrolysis. Specifically, the anode can be used as anodes for polymer electrolyte membrane water electrolyzer, electroplating, electrodeposition coating, electrocasting, electrorefining, alkaline water electrolysis, and others.

### [2. Method for manufacturing anode for electrolysis]

### [2.1. Manufacture of platinum bronze]

The platinum bronze is obtained by:
(a) adding a predetermined amount of a raw material of the metal element M to a platinum source;
(b) subjecting the raw material mixture to solid-phase reaction under predetermined conditions; and
(c) removing by-product metal platinum from the resultant reactant as required.

### [2.1.1. Blending process]

First, a predetermined amount of a raw material of the metal element M (hereinafter referred to as the "metal source") is added to a platinum source (blending process).

The platinum source is not specifically limited as far as platinum bronze can be synthesized from this source. Examples of the platinum source include:
(a) platinum oxide (PtO₂); and
(b) nitrate, chloro complexes, ammine salt, and hydroxy complexes of platinum.

The metal source is not specifically limited as far as platinum bronze can be synthesized from this source. Examples of the metal source include:
(a) salt with inorganic anions such as nitrate, fluoride salt, chloride salt, bromide salt, iodide salt, carbonate, perchlorate, phosphate, sulfate, and borate; and
(b) salt with organic anions such as acetate, oxalate, and citrate.

The optimum added amount of the metal source is selected according to the purpose. In general, as the added amount of the metal source is greater, platinum bronze whose x is greater is obtained.

### [2.1.2. Reaction process]

Thereafter, the raw material mixture is subjected to solid-phase reaction under predetermined conditions (reaction process). Optimum reaction conditions are selected according to the composition of the platinum bronze and the kind of the raw material. The reaction temperature is normally 650 to 700°C although it depends on the composition of the platinum bronze, etc. The reaction time is normally of the order of several minutes to several hours. When the raw material mixture is heat-treated under the predetermined conditions, platinum bronze is produced, and simultaneously metal platinum is also produced as a by-product.

### [2.1.3. Purification process]

The by-product metal platinum is then removed from the resultant reactant as required (purification process). The removal of the metal platinum is preferably performed by aqua regia treatment. With the aqua regia treatment under predetermined conditions, the platinum bronze can be isolated from the reactant.

### [2.2. Manufacture of anode]

The resultant platinum bronze powder may be used singularly or in combination with another material.

Also, the platinum bronze powder may be used in a state of being applied to the surface of an appropriate substrate or in a molded state.

### [3. Effects]

Since the platinum bronze is insoluble in aqua regia, it does not elute even under strong acid conditions where chloride ions coexist and resists degradation from exposure to a high potential. Also, the platinum bronze, which is an oxide itself, is not oxidized any further even at a high potential during water electrolysis, whereby its activity is not reduced, unlike platinum metal.

In particular, the platinum bronze containing predetermined metallic element M exhibits water electrolysis activity higher than Li-containing platinum bronze and iridium oxide. Also, the platinum bronze containing metallic element M is inexpensive compared to iridium oxide and exhibits high durability comparable to iridium oxide. Therefore, using such platinum bronze as an anode for electrolysis, electrolysis reaction can be performed efficiently.

### EXAMPLES

(Examples 1 to 6, among which examples 1, 3 and 4 are not part of the invention, and Comparative Examples 1 to 3)

### [1. Preparation of samples]

Platinum bronze was synthesized by the following method using Non-Patent Literature 1 as a reference. Platinum oxide (PtO₂) and metal nitrate were weighed at a mole ratio of 3:1 and mixed in a mortar. As the metal nitrate, used was Co(NO₃)₂·6H₂O (Example 1), Mn(NO₃)₂·6H₂O (Example 2), Cu(NO₃)2·3H₂O (Example 3), AgNO₃ (Example 4), Ce(NO₃)₃·6H₂O (Example 5), Bi(NO₃)₃·5H₂O (Example 6), or LiNO₃ (Comparative Example 1). Examples 1, 3 and 4 do not fall under claim 1.

Thereafter, the mixture was heat-treated at 650°C for 5 hours while flowing air (1 L/min). Further, the resultant reactant (mixture of platinum bronze and metal platinum) was immersed in hot aqua regia for 30 minutes, and a supernatant liquid was removed to remove metal platinum.

For comparison, platinum black (BET specific surface area: 12.7 m²/g) (Comparative Example 2) and iridium oxide powder (BET specific surface area: 53.6 m²/g) (Comparative Example 3) were used.

### [2. Evaluation]

### [2.1. XRD Measurement and SEM observation of platinum bronze immediately after synthesis]

FIG. 1 shows XRD patterns of a sample (CoₓPt₃O₄ + Pt), which is not part of the invention) after the heat treatment and a raw material mixture (PtO₂ + Co nitrate) before the heat treatment. FIGS. 2A and 2B show SEM images of the sample after the heat treatment (FIG. 2A) and the raw material mixture before the heat treatment (FIG. 2B). From FIGS. 1, 2A, and 2B, it is found that:
(a) a fine reactant is obtained from the coarse raw material mixture, and
(b) the reactant is constituted by a mixture of platinum bronze (CoₓPt₃O₄) and metal platinum.

FIG. 3 shows XRD patterns of the sample before and after the aqua regia treatment. From FIG. 3, it is confirmed that the metal platinum has been removed by the aqua regia treatment, isolating the platinum bronze.

### [2.2. BET specific surface area]

The BET specific surface area was measured for each platinum bronze by nitrogen adsorption measurement. Table 1 shows the measurement results. All of the resultant platinum bronzes had high specific surface areas.

**[Table 1]**

| Sample | Specific surface area [m²/g] |
|---|---|
| MnₓPt₃O₄ | 12.0 ±0.3 |
| CoₓPt₃O₄ | 18.8 ±0.4 |
| CuₓPt₃O₄ | 14.0 ±0.2 |
| AgₓPt₃O₄ | 3.8 ±0.2 |
| CeₓPt₃O₄ | 36.0 ±0.8 |
| BiₓPt₃O₄ | 8.9 ±0.1 |
| LiₓPt₃O₄ | 17.2 ±0.2 |

In which only samples with M being Mn, Bi and Ce are part of the invention.

### [2.3. Water electrolysis activity]

The platinum bronze powder was dispersed in acetone, and the dispersion was applied to the surface of a glassy carbon (GC) electrode and dried. Using this as the working electrode, electrochemical measurement was performed to evaluate the water electrolysis (oxygen evolution) activity. A reversible hydrogen electrode was used as the reference electrode, a gold mesh as the counter electrode, and 0.1 M perchloric acid as the electrolytic solution. The temperature of the solution was adjusted to 30°C. For the water electrolysis activity, used as the indicator was the value obtained by standardizing the current value at 1.7 V with the surface area of the catalyst supported on the GC electrode (calculated from the supporting weight and the BET specific surface area).

FIG. 4 shows cyclic voltammograms of cobalt platinum bronze, platinum black, and IrO₂. The water electrolysis activity of cobalt platinum bronze per unit area was higher than those of the platinum black and the iridium oxide. Also, great hysteresis was observed in the platinum black. This is because oxidation proceeds down into a lower layer at a high potential. Contrarily, the cobalt platinum bronze is small in hysteresis. It is presumably because the oxidation does not proceed even at a high potential since the cobalt platinum bronze itself is an oxide.

FIG. 5 shows comparisons of the water electrolysis activity among the platinum black, IrO₂, and MₓPt₃O₄ (M = Mn, Co, Cu, Ag, Bi, Ce, and Li). The water electrolysis activity of the platinum bronze containing any of the metallic elements M is greater than that of the platinum black except for the lithium platinum bronze.

FIG. 6 shows comparisons of the current maintenance rate after retention of the constant potential at 1.7 V among the platinum black, IrO₂, and MₓPt₃O₄ (M = Mn, Co, Cu, Ag, Bi, Ce, and Li). The "current maintenance rate" refers to the ratio of the current value (I₁₀) after a lapse of 10 seconds to the current value (I₆₀) after a lapse of 60 seconds (= I₁₀ × 100 / I₆₀). It is found that any platinum bronze is higher in sustaining the water electrolysis activity than the platinum black.

While the embodiment of the present invention has been described in detail, it is to be understood that the present invention is not limited by any of the details of the embodiment, but various modifications may be made without departing from the scope of the present invention as defined by claim 1.

The anode for electrolysis according to claim 1 can be used as anodes for polymer electrolyte membrane water electrolyzer, electroplating, electrodeposition coating, electrocasting, electrorefining, and others.

## Claims

1. An anode for electrolysis, comprising
platinum bronze containing metallic element M, which is a complex metal oxide including platinum, oxygen, and ions of metallic element M as the third ingredient with the compositional formula generally represented by MₓPt₃O₄, with 0 < x ≤ 1, wherein
the metallic element M is constituted by any one or more elements selected from the group consisting of Mn, Bi, and Ce.

2. Use of an anode for electrolysis according to claim 1 for a polymer electrolyte membrane water electrolyzer, electroplating, electrodeposition coating, electrocasting, or electrorefining.

## Patentansprüche

1. Anode für Elektrolyse, mit
ein metallisches Element M enthaltender Platinbronze, die ein komplexes Metalloxid ist, das Platin, Sauerstoff und Ionen eines metallischen Elementes M als dritte Zutat mit der Summenformel, die allgemein dargestellt wird durch MₓPt₃O₄, wobei 0 < x ≤ 1 ist, enthält, bei der das metallische Element M durch eines oder mehrere aus der Gruppe, die aus Mn, Bi und Ce besteht, ausgewählte Elemente gebildet wird.

2. Verwendung einer Anode für Elektrolyse nach Anspruch 1 für einen Protonen-Austausch-Membran-Wasserelektrolyseur, zum Galvanisieren, zur Elektrotauchbeschichtung, zum Elektroguss, oder zur Elektroraffinierung.

## Revendications

1. Anode pour l'électrolyse, comprenant
un bronze de platine contenant un élément métallique M, qui est un oxyde métallique complexe comprenant du platine, de l'oxygène et des ions de l'élément métallique M en tant que troisième ingrédient, dont la formule de composition est généralement représentée par MₓPt₃O₄, avec 0 < x ≤ 1, dans laquelle
l'élément métallique M est constitué d'un quelconque ou de plusieurs des éléments choisis dans le groupe constitué de Mn, Bi et Ce.

2. Utilisation d'une anode pour l'électrolyse selon la revendication 1 pour un électrolyseur d'eau à membrane électrolyte polymère, la galvanoplastie, le revêtement par électrodéposition, l'électrofusion ou le raffinage électrolytique.
